# EUROPEAN PATENT SPECIFICATION

(11) **EP 2 999 186 B1**
(45) Date of publication and mention of the grant of the patent: **07.11.2018**
(21) Application number: 14185372.1
(22) Date of filing: 18.09.2014
(51) Int. Cl.: H04L 29/06

(54) **A method for selecting a combination of responses to an on-going attack on a virtual network and associated hypervisor**
Verfahren zur Auswahl einer Kombination von Antworten auf einen laufenden Angriff auf ein virtuelles Netzwerk und zugehöriger Hypervisor
Procédé de sélection d'une combinaison de réponses à une attaque contenue sur un réseau virtuel et hyperviseur associé

(43) Date of publication of application: 23.03.2016
(73) Proprietor: Alcatel Lucent, 91620 Nozay (FR)
(72) Inventor: El Samarji, Léa, 91620 Nozay (FR); Dubus, Samuel, 91620 Nozay (FR)
(74) Representative: Berthier, Karine

(56) References cited:
- WO-A2-2006/107712
- US-A1- 2011 185 432
- CHUNG CHUN-JEN ET AL: "NICE: Network Intrusion Detection and Countermeasure Selection in Virtual Network Systems", IEEE TRANSACTIONS ON DEPENDABLE AND SECURE COMPUTING, vol. 10, no. 4, 1 July 2013 (2013-07-01), pages 198-211, XP002737751, DOI: 10.1109/TDSC.2013.8

## Description

### FIELD OF THE INVENTION

The present invention relates to security of communication network.

### BACKGROUND OF THE INVENTION

The realm of telecommunication has evolved drastically for the last decades, driven by new technologies and new habits of consumers. In order to tailor communication network to demands in term of variety, capacity and reactivity, strategy of network virtualization has proven to be adapted to many cases. Network virtualization defines in a sole network entity that combines many resources from a traditional communication. Virtual network architecture combines hardware resources, software resources, functionalities from various network elements.

As virtual network architectures drain more traffic, services and content, they became targets of attacks. The trend for such attacks is for sophistication and complexity and becomes a serious concern for integrity of virtual network architectures. Their nature exposes them to simultaneous attacks on their different resources. Often an attack on an aspect of a virtual network architecture is a combination of elementary attacks, each attack focusing on an element of the architecture for exploiting a vulnerability, a mis-configuration, etc. It can be assimilated to an attack scenario wherein concurrent or coordinated attack actions are conducted to endanger the virtual network architecture, the attack scenario having a specific purpose, like stealing a user identity or faking a security certificate. Accordingly the measures to counter these dangers have complex elaboration. In order to mitigate attack, different responses handled by the virtual network architecture are possible. In case of identity theft, possible responses are deactivation of the user account, enabling multi-factor authentication, etc. The choice of the response depends on multiple aspects such as its relevance to contain the risks, or its cost of deployment, or impacts on the services. Upon simultaneous attacks from an attack scenario, the aggregations of impacts and costs have to be assessed for each combination of possible responses with the objective to choose the most relevant combination of responses. Such task is complex but crucial. Some solutions exist to assess patterns of combination of responses that are elaborated offline based on human expertise, but they cannot fit to any situations. Other solutions exist that involves systematic highest threat management, but in the end it can occur that it was not the most relevant response. Existing solutions also deal with threats on a case by case, they do not consider their possible combinations. Also they do not anticipate what can happen after an attack is addressed by a response from the virtual network architecture. In the best case the threat is removed, but it happens frequently that new attacks occur, and/or that it remains residual threats as the initial attack was not fully mitigated.

In the context of multiple simultaneous attacks on a virtual network architecture, it is then needed to accurately assess the return of investment of combinations of responses for mitigating the risks, in order for the virtual network architecture to select the most appropriate combination of responses. Such assessment has to adapt to the broad variety of attack scenario and needs to be performed as soon as an attack is detected and threatening the virtual network architecture.

### SUMMARY OF THE INVENTION

The invention aims to remedy all or some of the disadvantages of the above identified prior art. It particularly proposes ways for determining the most appropriate reaction to an ongoing attack on a virtual network.

The invention is defined by the subject matter of the independent claims. Advantageous enhancements are subject to the dependent claims.

A first aspect of the invention relates then to a method for selecting a combination of responses to an on-going attack on a virtual network, said method comprising the following steps performed by a hypervisor:
- determining a first set of attacks graphs, each attacks graph being modeled from said on-going attack and comprising a plurality of potential attacks and,
- determining a second set of combinations of responses corresponding to the plurality of potential attacks from at least one attacks graph from the first set,
- duplicating the virtual network into a third set of duplicated virtual network,
- executing at least two combinations of responses from the second set respectively in at least two duplicated virtual networks from the third set, and measuring a set of metrics representative of the state of each of said at least two duplicated virtual network,
- determining a return of combined responses investment metric from each set of metrics,
- selecting, depending on the step of determining the return of combined responses investment metric, an adapted combination of responses amongst the second set of combination of responses.

Thus, thanks to these features, the method enables the selection of the adapted combination of responses to the ongoing attack and the subsequent potential attacks. The determination of the attacks graph from the first set advantageously allows dealing with the potential attacks on a case by case but also with their possible combinations. The combinations of responses of the second set are determined according to said potential attacks and their combinations. It offers advantageously a broad variety of potential behavior to mitigate the potential attacks. The duplication of the virtual network into duplicated virtual network, for executing the combination of responses, allows evaluating the behavior of the virtual network upon a response scenario but without endangering it. Said evaluation is achieved through measurement of set of metrics that reflects the status of the duplicated virtual network. The adapted combination of responses is selected according to return of combined responses investment metrics that are determined from the measured set of metrics. It advantageously allows selecting the most appropriate combination of responses amongst all the possible combination of responses. The method offers adapted responses to multiple attacks scenarios by evaluating return of investment metrics of possible responses scenarios. It defines then a flexible solution for preserving the virtual network from threats.

According to various embodiments, such method comprises one or more of the features below, which should be considered in any possible technical combinations:
- the step of executing is performed simultaneously and in real-time in each duplicated virtual network from the at least two duplicated virtual networks (DVNi) from the third set,
- the method further comprises the following steps:
   ∘ determining a risk for each attacks graph from the first set,
   ∘ selecting the at least one attacks graph according to its associated risk,
- a response comprised in a combination of responses from the second set comprises a set of security policies,
- the set of metrics comprises a quality of service metric and/or an energy consumption metric and/or an execution time metric, said execution time corresponding to the time needed to execute each of the combination responses in the duplicated virtual networks,
- the step of determining the return of combined responses investment metric is achieved by determining the return of combined responses investment metric according to direct costs of execution of the combination of responses in the duplicated virtual networks,
- the step of determining the return of combined responses investment metric determines the return of combined responses investment metric according to indirect costs of execution of the combination of responses in the duplicated virtual networks,
- the step of determining the return of combined responses investment metric further comprises the following steps:
   ∘ estimating a potential residual attack remaining after the execution of one combination of responses in the duplicated virtual network,
   ∘ determining a fourth set of residual attacks graph, each residual attacks graph being modeled from the potential residual attack,
   ∘ determining a residual risk for each residual attacks graph,
   ∘ selecting at least one residual attacks graph from the fourth set according to its determined residual risk,
   ∘ determining the return of combined responses investment metric according to the residual risk from the selected at least one residual attacks graph.

A second aspect of the invention relates then to a hypervisor for selecting a combination of responses to an on-going attack on a virtual network, comprising:
- means for determining a first set of attacks graph, each attacks graph being modeled from said on-going attack and comprising a plurality of potential attacks,
- means for determining a second set of combination of responses corresponding to the plurality of potential attacks from at least one attacks graph from the first set,
- a duplication module for duplicating the virtual network into a third set of duplicated virtual network,
- an execution module for executing at least two combinations of responses from the second set respectively in at least two duplicated virtual networks from the third set,
- a measurement module for measuring a set of metrics representative of the state of each of the at least two duplicated virtual network,
- an evaluation module for determining a return of combined responses investment metric from each set of metrics,
- a selection module for selecting an adapted combination of responses amongst the second set of combination of responses.

Thus, thanks to these features, the hypervisor is adapted for selecting the adapted combination of responses corresponding to the ongoing attack. The hypervisor advantageously comprises means for determining the attacks graph from the first set, said attacks graph advantageously allows dealing with the potential attacks on a case by case but also with their possible combinations. The hypervisor also comprises means for determining the combinations of responses of the second set that corresponds to responses to potential attacks and their combinations. The duplication module from the hypervisor enables to make copy of the virtual network in order to deploy the different combination of responses in corresponding copies through the execution module. The hypervisor allows preserving the virtual network by using copies for evaluation purpose. Said evaluation is achieved by the measurement module that measures set of metrics that reflects the status of the duplicated virtual networks upon the executions of the different combination of responses. The evaluation module advantageously determines return of combined responses investment metrics that allows quantifying the efficiency of the combination of responses. The selection module offers then to select the adapted combination of responses according to return of combined responses investment metrics. The hypervisor is then enabled to address a broad variety of potential attacks that threatens the virtual network.

According to various embodiments, such method comprises one or more of the features below, which should be considered in any possible technical combinations:
- the hypervisor is a centralized entity in the virtual network,
- the hypervisor is a distributed entity in the virtual network.

### BRIEF DESCRIPTION OF THE FIGURES

Some embodiments of the present invention are now described, by way of example only, and with reference to the accompanying drawings, in which:
- FIG. 1 is a schematic block diagram of an attacked virtual network comprising an embodiment according to the invention,
- FIG. 2 is a schematic block diagram of attack graphs,
- FIG. 3 is a schematic block diagram of combination of responses corresponding to attacks according to the invention,
- FIG. 4 is a schematic block diagram of duplication of a virtual network according to the invention,
- FIG. 5 is a schematic block diagram of combination of responses to be executed in duplicated virtual networks,
- FIG. 6 is a schematic block diagram of selection of a combination of responses,
- FIG. 7 is a flowchart showing steps performed in an embodiment of the method according to the invention.

The same reference number represents the same element to the same type of element on all drawings, unless stated otherwise.

### DESCRIPTION OF EMBODIMENTS

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims.

In the following description, well-known functions or constructions by the man skilled in the art are not described in detail since they would obscure the invention in unnecessary detail.

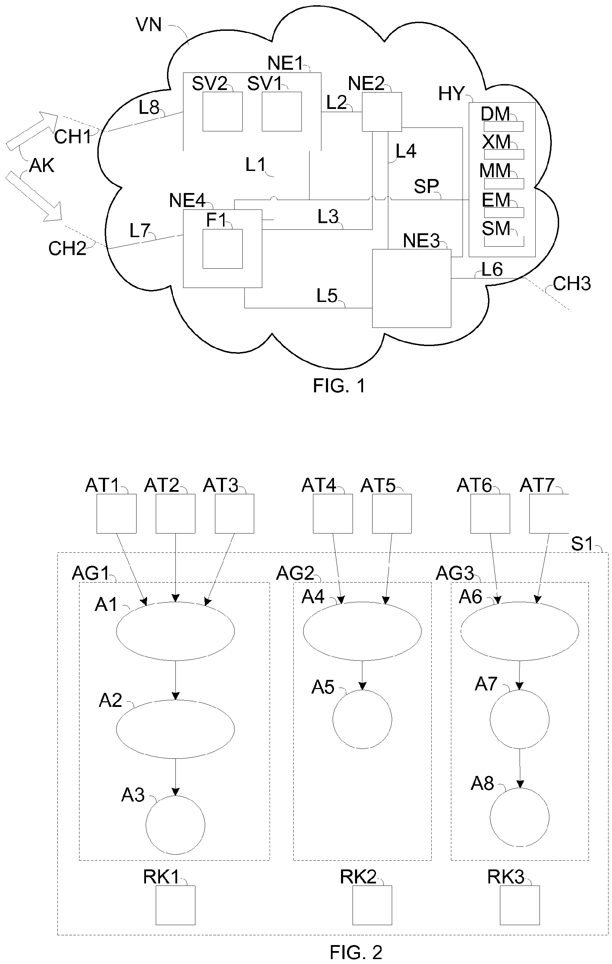

Referring to figure **FIG. 1****,** a schematic block diagram of an attacked virtual network comprising an embodiment according to the invention is depicted.

A virtual network NW is schematized as a simplified representation of a larger virtual network. The virtual network VN may be an independent network such as a virtual private network, or could be overlaying a larger communication network. In an example, the virtual network VN combines hardware resources, software resources, functionalities from various network elements from said larger communication network. The virtual network VN defines then a network entity that offers and/or provides broad variety of services or functionalities. The virtual network advantageously adapts to the needs of its user by adding or removing resources depending of the requested load. The virtualization of functions from the virtual network VN also eases deployment of said functions. Indeed the virtual network VN allows a global control of its virtualized resources instead of controlling individually each resource or each network element. The virtual network VN also offers the flexibility of its resources that may for example be shared amongst other virtual networks. For example the virtual network VN may comprise a server, able to dedicate a variable amount of its resources for the virtual network VN, said server hosting other virtual entities as well.

In an embodiment, the virtual network VN comprises a hypervisor HY. The hypervisor HY is responsible for managing and controlling the resources of the virtual network VN, said resources either being hardware or software ones. For example the hypervisor HY is adapted to configure routers or switches that are comprised in the entity of the virtual network VN. Said configuration may involve allocation of data links, levels of security etc. In another example, the hypervisor HY assigns functionalities to a server from the virtual network VN. Said functionalities could be for example a data caching service or a data packet inspection.

In an embodiment, the virtual network VN comprises functional modules such as:
- a duplication module DM which will be described later on,
- an execution module XM which is adapted for executing various tasks in the virtual network VN. Said tasks are related to supervision and control of the resources of the virtual network VN,
- a measurement module MM enabled for monitoring information and statuses related to the virtual network VN. For example the measurement module MM is able to perform multiple measurements of volume of data exchanged or services reactivity, or is able to retrieve statistics and measurements data from probes comprised in the resources of the virtual network VN,
- an evaluation module EM that will be described later on,
- a selection module SM that will be described later on.

In the present embodiment the hypervisor HY is depicted as a centralized entity. It is meant by the term "centralized entity", that the hypervisor HY is a device comprised in the virtual network VN. In an example this device is a standalone resource from the virtual network VN. In another example this device is comprised in one of the resources of the virtual network VN.

In another embodiment the hypervisor HY is a distributed entity amongst the resources comprised in the virtual network VN. Said entity is operational through the cooperation of modules dispatched in each element of the virtual network VN, the modules being either made of hardware and/or software.

In another example the hypervisor HY is distant from the virtual network VN and hosted by its operator or owner.

In an embodiment, the virtual network VN comprises network elements NEi, a first network element NE1, a second network element NE2, a third network element NE3 and a fourth network element NE4. The network elements NEi are respectively fulfilling different functions or are addressing different purposes. In a non limiting example, the first network element NE1 provides to the virtual network VN a first service SV1 and a second service SV2. Given the nature of the virtual network VN, the first service SV1 and second service SV2 are configurable by the hypervisor HY. For example the hypervisor HY may configure the first service SV1 as an internal routes finder and the second service SV2 as offering services from the border gateway protocol.

Similarly the second network element NE2 and the third network element NE3 are supervised by the hypervisor HY. They are configured and tasked for the operations of the virtual network VN. In examples, the second network element NE2 is a cost and billing server, and the third network element NE3 is a media server comprising cached media content and cooperating with other media delivery servers not depicted on figure FIG. 1.

Similarly the fourth network element NE4 is controlled by the hypervisor HY and fulfills tasks for the virtual network VN. It comprises the first functionality F1 which is in an example a security function that provides (de)ciphering, authentication, etc., services.

A set of links Li are connecting the network elements NEi together and to the outside of the virtual network VN. A first link L1 connects the first network element NE1 and the fourth network element NE4, a second link L2 connects the second network element NE2 with the first network element NE1, a third link L3 connects the fourth network element NE4 with the second network element NE2, a fourth link L4 connects the second network element NE2 with the third network element NE3, and a fifth link L5 connects the fourth network element NE4 with the third network element NE3.

The set of links Li are configured and supervised by the hypervisor HY. In examples those links are a combination of physical connections, connecting directly elements together, and logical connections, that are carried over multiple physical layer and nodes. Said logical connections advantageously are arranged by the hypervisor HY which provide a flexible layout of connections.

The hypervisor HY supervises the elements from the virtual network VN through a supervision link SP that connects it to all the resources, such as the network elements NEi or the links Li. In an example said supervision link SP is a combination of physical and logical connections.

The sixth link L6, the seventh link L7 and the eighth link L8 are respective connections between the virtual network VN and others networks. Said links allows the virtual network VN to be incorporated in larger communication network for example. Said links are also either physical connections or logical connections or combination of both. They may also comprise access points that are not depicted on figure FIG. 1. A user eligible to access the virtual network VN connects his device either directly or indirectly to first communication channel CH1, or the second communication channel CH2, or the third communication channel CH3, that are respectively interfaced with the sixth link L6, the seventh link L7 and the eighth link L8. Said interfacing could be achieved for example through access points.

The virtual network VN is under an attack AK. In an example the attack AK is conveyed through the first communication channel CH1 and the second communication channel CH2. The attack AK is conducted for compromising the virtual network VN. In an example, the attack AK, initiated by a group of attackers, may be targeting virtualized resources of the virtual network VN, such as a virtualized function or specific data managed by the network. In another example, the attack AK may be targeting resources of the virtual network VN, such as the network elements that are hosting a part of the virtual network VN, or some dedicated functionalities that are used by the virtualized resources of the network. The attack AK may be highly focused on some parts of the virtual network VN, but it could be also a combination of different simultaneous targets, each target being attacked by a dedicated attack vector. In an example, the attack AK is targeting a weakness or vulnerability from the second service SV2 of the first network element NE1, and targets also the first function F1 from the fourth network element NE4 by flooding its interfaces by continuous requests.

Referring to figure **FIG. 2****,** a schematic block diagram of attack graphs is depicted.

The results of the ongoing attack AK on the virtual network VN are variable. The attack AK may succeed totally, compromising all the attacked targets, or may succeed only partially if some targets remain safe. It is possible also that the attack AK fails but weakens the resources of the virtual network VN, or provides precious information for a sub-sequent attack. The attack AK may be also part of a larger attack scenario and is for example the first phase. The varying results are also explained by the response initiated by the virtual network VN for countering the attack AK.

Depending on the possible results of the attack AK or the intents of the originators of said attack AK, various scenarios can be elaborated. These scenarios are relying on possible outcomes of the attack AK, but could be also handled depending on the current progress of ongoing attack AK. Said scenarios involve new attacks or add targets from the virtual network VN. It is then valuable to evaluate or predict such future threats.

In an embodiment, a first set S1 of attacks graphs AGi is determined. An attacks graph AGi from the first set S1 comprises a plurality of potential attacks Ai. Non limiting examples of attacks graph AGi are a first attacks graph AG1, a second attacks graph AG2, a third attacks graph AG3. Of course other variations of attacks graph are possible and the set S1 is not limited to 3 attacks graphs.

The first attack graph AG1 is derived from the attack AK and involves a pool of attackers, a first attacker AT1, a second attacker AT2 and a third attacker AT3. Said attackers may be part of the initiators of the attack AK or could be also attacking the virtual network VN subsequently in an opportunistic manner. In the scenario depicted by the first attacks graph AG1, the first attacker AT1 and the second attacker AT2 are performing a simultaneous first attack A1 and a simultaneous second attack A2. Depending on their results, the third attacker AT3 may conduct a single third attack A3. The sequence of first attack A1, second attack A2 and third attack A3 forms the first attacks graph AG1. For example, the first attacks graph AG1 aims to compromise the interconnections used by virtualized functions of the virtual network VN. For that purpose, the simultaneous first attack A1 and second attack A2 may be targeting the logical links established between the network elements of the virtual network VN, and then once they are comprised, the third attack A3 is conducted to benefit from these corrupted logical links.

The second attacks graph AG2 is also derived from the attack AK. It involves a pool of attackers, a fourth attacker AT4 and a fifth attacker AT5. According to the second attack graph AG2, it is evaluated that they may combine their resources to perform a simultaneous fourth attack A4, and in parallel, the fourth attacker perform AT4 may conduct a single attack A5. For example the simultaneous fourth attack AT4 aims to fingerprint authentication server such as the fourth network element NE4, and the single attack A5 targets at isolating said fourth network element NE4.

The third attacks graph AG3 is also determined from the attack AK. It involves a pool of attackers, a sixth attacker AT6 and a seventh attacker AT7. The third attacks graph AG3 emphasizes a scenario wherein the sixth attacker AT6 and the seventh attacker AT7 are performing the simultaneous sixth attack A6. A single seventh attack A7 is executed by the sixth attacker A6 and a single eight attack A8 is performed by the seventh attacker A7. For example the sixth attack A6 is a discovery for active user, combined with the seventh attack A7 for password cracking of discovered users, enabling the seventh attacker A7 to perform the eighth attack A8 corresponding to an identity theft of compromised users.

In a non limiting example, the attacks graph AGi from the first set S1 are determined according to an attack modeling language, the state of the services and assets from the virtual network VN, and observations and/or detections of the attackers and their ongoing attacks. A graph module for modeling attacks graph is then used for determining the possible attacks graph according to rules, either static or dynamic, and algorithms and parameters. Such module is for example described in "Situation calculus and graph based defensive modeling of simultaneous attacks. In Cyberspace Safety and Security, volume 8300 of Lecture Notes in Computer Science, pages 132-150. Springer International Publishing, 2013." In this document, an attack planner provides a list of different potential attacks that can target simultaneously the virtual network VN, and an application transforms the output of the attack planner into the first set S1 of attacks graph. The graph module is a function provided by the hypervisor HY in an example.

In an embodiment, each attacks graph AGi from the first set S1 is associated with a risk RKi, a first risk RK1 associated to the first attacks graph AG1, a second risk RK2 associated with the second attacks graph AG2, and a third risk RK3 associated with the third attacks graph AG3. Each risk RKi is determined as a value representative of the dangers of the plurality of potential attacks Ai of one of the attacks graph AGi that could arm the virtual network VN. In an example, the determination of the risk RKi is ruled by the definition of a risk by the National Institute of Standards and Technology (NIST) which function of the attack likelihood and the impact of said attack on a system such a the virtual network VN. A security expert may be involved in the determination of impacts of an attack scenario, for providing his background experience in an attack list as exhaustive as possible, or in the setting of rules for evaluating such impacts.

In an example a risk module is in charge of evaluating the first risk RK1, the second risk RK2 and the third risk RK3, said risk module being a device from the hypervisor HY.

Amongst the first set S1 of attacks graph AGi, some of the attacks graph AGi are more dangerous or are threatening more the virtual network NW. The associated risks RKi from each attacks graph AGi allows to identify scheme of attacks that have to be considerate carefully because their associated risks indicates that the virtual network VN could be compromised. Advantageously the risk RKi allows performing a ranking of the attacks graph AGi in terms of possible threats. In an embodiment, at least one attacks graph AGi from the first set S1 is selected according to it associated risk RKi. In an example the selected at least one attacks graph AGi is ranked on the top of the rank of risks due to its risk RKi. In such example, the first risk RK1, the second risk RK2, and the third risk RK3 are dimension-less numerical values, and the third risk RK3 is the highest numerical value, indicating the third attacks graph AG3 depicts a scheme of attacks that presents the greater dangers for the virtual network VN. In another example, the first risk RK1, the second risk RK2 and third risk RK3 respectively are tuple of indicators, each indicators being dedicated on specific resources or functionalities of the virtual network VN. The selected at least one attacks graph AGi could be then chosen according to the vital resources or functionalities that have to be preserved on top of others assets from the virtual network VN.

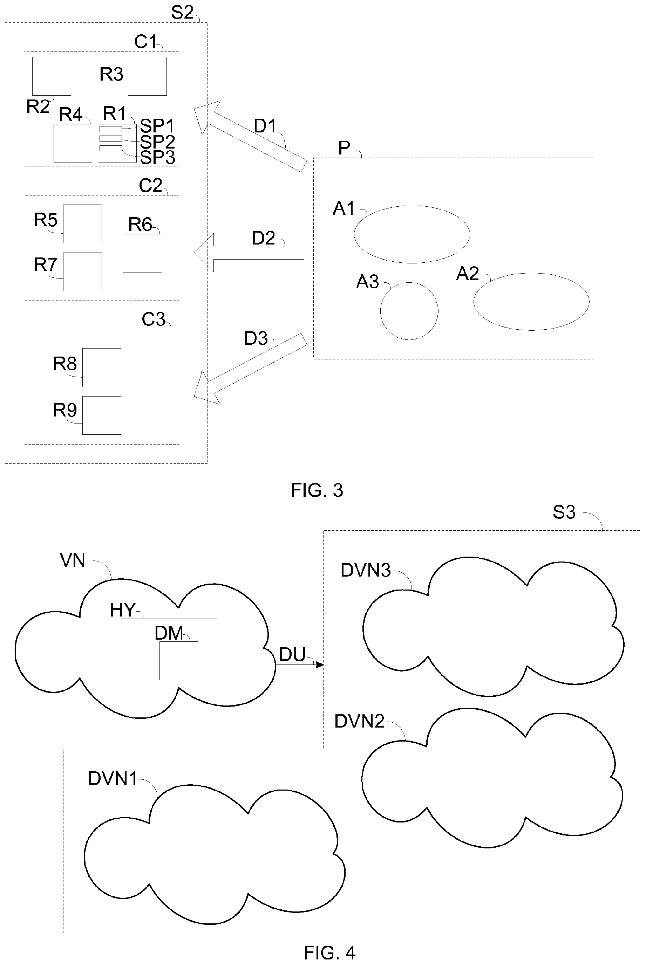

Referring to figure **FIG. 3****,** a schematic block diagram of combination of responses corresponding to attacks according to the invention is depicted.

In an embodiment the first attacks graph AG1 is selected from the first set S1. In examples, said selection is performed accordingly to the risk RKi of each attacks graph AGi, or said selection is performed randomly on the first set S1. Other criteria for selection could also be considered as for example the numbers of different potential attacks that are comprised in each attacks graph AGi.

As the attack AK is ongoing on the virtual network VN, the potential attacks Ai from the plurality P of the first attacks graph AG1 have to address in order to preserve the integrity of the virtual network VN. A first determination D1 is performed to determine a first combination of responses C1 to the first attacks graph AG1. By the terms "determining combination of responses" it is meant that counter measures, protective actions are to be determined in order to reduce or mitigate the damages to the virtual network VN. Each potential attack Ai has to be at least considered solely for evaluating an appropriate response. But the combination of potential attacks Ai has also to be considered as depicted by the first attacks graph A1. The first determination D1 allows for example to determine a first response R1 and a second response R2, that are addressing the potential simultaneous first attack A1, a third response R3 aims to cancel the simultaneous second attack A2, and a fourth response R4 deals with the potential third attack A3. A first combination of responses C1 is formed by the first determination D1, said first combination of responses C1 comprises the first response R1, the second response R2, the third response R3 and the fourth response R4. In an example, said responses may be handled by the network elements from the virtual network VN. The first network element NE1 may conduct the first response R1 in order to preserve the integrity of the first service SV1 which is part of the virtual network VN.

The first combination of responses C1 is not the only possible reaction for protecting the virtual network VN of potential attacks scheme that could be subsequent to the attack AK. A second determination D2 determines a second combination of responses C2 that comprises a fifth response R5, a sixth response R6 and a seventh response R7. Said responses are aiming also to ensure the safety of the virtual network VN in case the first attacks graph AG1 is initiated by attackers, but these responses may be different than the responses from the first combination of responses C1. For example the first response R1 and the second response R2 are aiming to mitigate the simultaneous first attack A1 by isolating the first network element NE1 and disabling the first service SV1, whereas the fifth response R5 transfers the ongoing processing from the first service SV1 to the second service SV2, and the sixth response R6 enables hardened firewall policies for the virtual network VN.

A third determination D3 determines a third combination of responses C3 that comprises the eighth response R8 and the ninth response R9. The third combination of responses C3 is also aiming to address the threats of the first attacks graph AG1.

The first combination of responses C1, the second combination of responses C2 and the third combination of responses C3 are forming a second set S2. Other determinations of combination of responses to be comprised in the second set S2 are of course possible, as long as said combinations aim to protect the virtual network VN from the potential attacks Ai from the plurality P, wherein potential attacks Ai are to be considered on a case by case, but also in combined cases as depicted by the first attacks graph AG1.

In an example a database of potential attacks contexts or goals from the virtual network VN is elaborated to address as many cases as possible. Such database could be populated progressively as the virtual network VN is being attacked over time, or could be also inheriting from security expertise knowledge. At least a potential response Ri is associated to each potential attack Ai from the database. As seen above, multiple potential responses Ri could be associated to the potential attack Ai for preserving the virtual network VN. The potential response Ri comprises a set of security policies SPi. The first response R1 comprises a first security policy SP1, a second security policy SP2 and a third security policy SP3. Each security policy SPi being a list or sequence of security rules to be applied in case the potential attack Ai is ongoing. For example a security rule could be basic action such as blocking a communication port, or authorizing/denying the communication of a device on a specific protocol with another device or elements from the virtual network VN. Additionally a verification can be performed to check the operational security assurance of a security rule. The operational security assurance is associated with the security rule and defines the behavior of the security rule or the behavior of the system on which the security rule is being applied. Therefore the operational security assurance allows evaluating the efficiency of the security rule. The list or sequence of security rules defines the security policy SPi that is tailored to address a particular issue or threat. The set of securities policies comprised in the response Ri allows said response Ri to be adapted for defending and preserving a given aspect of the virtual network VN.

Referring to figure **FIG. 4****,** a schematic block diagram of duplication of a virtual network according to the invention is depicted.

Through an action of duplication DU, the virtual network VN is duplicated into duplicated virtual networks DVNi, such as a first duplicated virtual network DVN1, a second duplicated virtual network DVN2, and a third duplicate virtual network DVN3. Those duplicated virtual networks DVNi are comprised in a third set S3.

By the terms "action of duplication DU", it is meant that a copy of the virtual network VN is performed, said copy encompassing all the characteristics of the virtual network VN. At a given instant, the virtual network VN is evaluated in terms of its resources and structure such as the current scheme of network elements connections, and the precise state of each of its components are quantified. Then the first duplicated virtual network DVN1 is created with the exact same structure and current status. In an example, the first duplicated virtual network DVN1 shares the same hardware and software resources as the virtual network VN. It is possible for network elements such as the first network element NE1 to host multiple virtual networks. In another example, the duplication into the first duplicated virtual network DVN1 is using different resources than the ones from the virtual network VN. Considering the flexibility of virtualized functions, it is possible to replicate a given part of the virtual network VN hosted by some network elements to other network elements. The use of virtualization along with abstraction layers eases such replication. Similarly, the second duplicated virtual network DVN2 and the third duplicated virtual network DVN3 are replications of the virtual network VN. The duplication action DU is depicted with three duplications of the virtual network VN but the number of copies can be different, either smaller or higher. Advantageously, the number of duplicated virtual networks DVNi in the third set S3 is similar to the number of elements from the second set S2 of combination of responses Ci.

In an embodiment, the duplication DU is operated by the hypervisor HY through a duplication module DM. In another example, in order to duplicate quickly the virtual network VN, a virtual machine fork can be used, said fork involving cloud computing abstraction for cloning entities such as the virtual network VN.

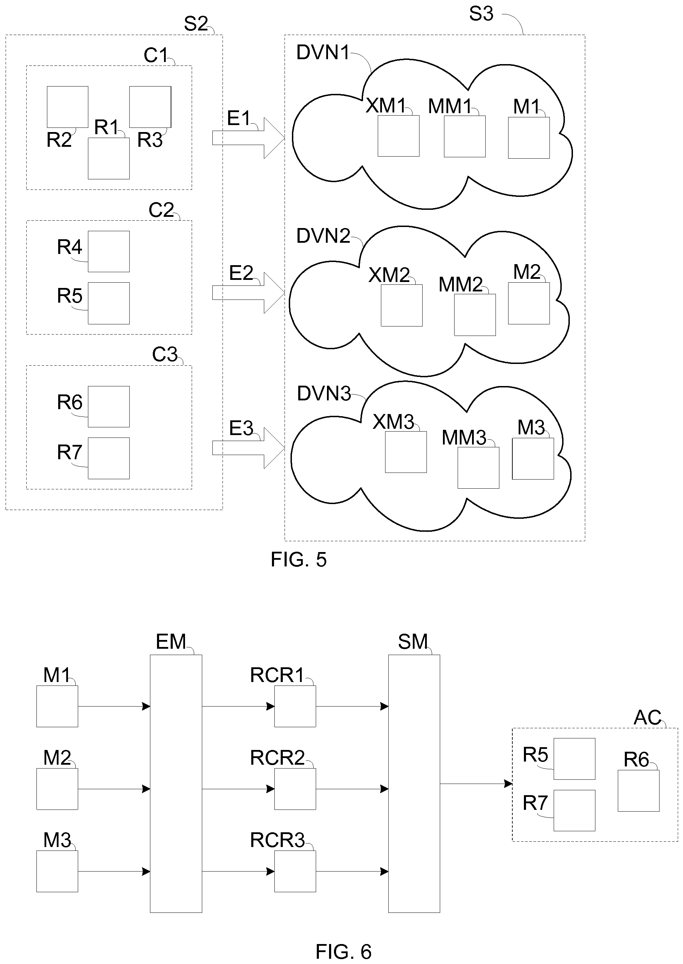

Referring to figure **FIG. 5****,** a schematic block diagram of combination of responses to be executed in duplicated virtual networks is depicted.

The combinations of responses Ci are executed in the duplicated virtual networks DVNi. The first combination of responses C1 is injected into the first duplicated network DVN1 for being executed by a first execution E1 by said first duplicated virtual network DVN1. Similarly the second combination of responses C2 is executed by the second duplicated virtual network DVN2 by a second execution E2, and the third combination of responses C3 is executed by the third duplicated network DVN3 by a third execution E3.

In an embodiment, the executions of the respective combinations of responses Ci is performed simultaneously in each duplicated virtual networks DVNi. Each duplicated virtual networks DVNi deploys its combination of responses Ci in parallel of the others duplicated virtual networks DVNi. The simultaneous executions are performed in real-time in the duplicated virtual networks DVNi. It is meant by the terms "real-time" that the executions are performed in a nominal way by the duplicated virtual networks DVNi, as if it was the virtual network VN that was to execute one of these combinations of responses Ci.

In an embodiment, the hypervisor HY is adapted to supervise all the duplicated virtual networks DVNi, and the first execution E1, the second execution E2 and the third execution E3 are performed by the execution module XM.

In another example, the first execution E1 is performed by a first execution module XM1, which fulfills a similar role as the execution module XM in the duplicated instance of hypervisor HY in the first duplicated virtual network DVNi. Similarly a second execution module XM2 performs the second execution E2 and a third execution module XM3 performs the third execution E3, said second execution module XM2 and third execution module XM3 being duplicated instances of the execution module XM in the respective second duplicated virtual network DVN2 and third duplicated virtual network DVN3.

As the combination of responses Ci that are being executed by the duplicated virtual networks DVNi, each of said duplicated virtual network DVNi reacts differently as each combination of responses Ci is different. Before the start of the first execution E1, the second execution E2 and the third execution E3, the duplicated network DVNi from the third set S3 are in the same state than their parent virtual network VN, whereas during and after said executions, the states of the respective duplicated network DVNi are different. The evolution of the differences between the initial state of the virtual network VN and each current state of each duplicated virtual network DVNi allows evaluating the behavior of each combination of responses Ci through sets of metrics Mi, such as first set of metrics M1, a second set of metrics M2 and a third set of metrics M3. Indeed during the first execution E1, the first set of metrics M1 is measured, said first set of metrics M1 being representative of the state of the first duplicated virtual network DVN1, and said monitoring being performed in real-time. Similarly the second set of metrics M2 is monitored in real-time and is representative of the state of the second duplicated network DVN2. The third set of metrics M3 is monitored during the third execution E3 and depicts the current state of the third duplicated network DVN3.

In an embodiment, a first timer is comprised in the first set of metrics M1. The first timer is started once the first execution E1 takes place in the first duplicated virtual network NW. The first timer allows measuring a first execution time metric, which corresponds to the current duration of execution of the first execution E1. Similarly a second timer and a third timer are respectively comprised in the second set of metrics M2 and the third set of metrics M3. The first timer, second timer and third timer are advantageous for comparing the respective execution time of the execution of the first combination of responses C1, the second combination of responses C2 and the third combination of responses C3. Each combination of responses Ci involves different defensive steps defined by their respective security policies SPi therefore their execution time may differ. For example if the first execution E1 takes too long, it adds potentially more risk on the virtual network VN if it were to perform the first execution E1.

In an embodiment, the first set of metrics M1 comprises a first energy consumption metric, representative of the consumed power during the first execution E1. The first energy consumption metric is also evaluated in real-time, and provides at a given instant the amount of energy that is needed to deploy and currently execute the first combination of response C1. Similarly the second set of metrics M2 and the third set of metrics M3 respectively comprise a second energy consumption metric and a third energy consumption metric. Advantageously after a given duration of execution of each of the combination of responses Ci, or at the end of said executions, it is possible to compare the consumed energy. In an example one of the combination of responses Ci may have a short execution time but at the expense of a drastic increase of energy consumption, due for example of the mechanisms used to addresses the threat of the corresponding attack graph AGi.

In an embodiment, the first set of metric M1 comprises a first Quality of Service (QoS) metric. The first QoS metric is evaluated in real-time while the first execution E1 of the first combination of responses C1 is being executed. The first QoS metric is representative of the evolution of the services and/or functionalities offered by the first duplicated virtual network DVN1 while the first combination of responses C1 is being deployed. The first QoS metric depicts then at a given time what would have happened on the virtual network VN if it were to deploy such first combination of responses C1. The first QoS metric provides a picture of overall performances in terms of availability, or reactivity, or viability of the virtual network VN. In an example, one service offered by the virtual network VN is a cloud media streaming service, and the first QoS metric encompasses information relative to media streaming error rate, packet delay jitter, latency that are monitored in real-time in the first duplicated virtual network DVN1 while it executes the first combination of responses C1. Therefore it is possible to have an overview of the evolution of the quality of service of the cloud media streaming service in the virtual network VN if it were to perform the first combination of responses C1. In another example the first QoS metric is a tuple of QoS values, each QoS value being representative of a particular service of the first duplicated virtual network DVN1.

Similarly the second set of metric M2 and the third set of metric M3 respectively comprise a second QoS metric and a third QoS metric. Said second QoS metric and third QoS metric are respectively representative of the state of services from the second duplicated virtual network DVN2 and the third duplicated virtual network DVN3, and are evaluated in real-time while the second execution E2 and the third execution E3 are being performed.

In another example the first of metric M1 further comprises a central processing unit occupancy metric, a memory usage metric and other metrics useful to monitor in real-time the assets or resources of the first duplicated virtual network DVN1.

In an embodiment, the hypervisor HY comprises the measurement module MM for monitoring or measuring information and statuses of the virtual network VN. The measurement module MM is also able to monitor the set of metrics Mi as the hypervisor HY supervises the duplicated virtual networks DVNi. In another example, a first measurement module MM1 is a duplicated instance of said measurement module MM and is responsible for taking care of the first set of metrics M1. A second measurement module MM2 is another duplicated instance of said measurement module MM for collecting the second set of metrics M2. A third measurement module MM3 is measuring the metrics comprised in the third set of metrics M3.

Referring to figure **FIG. 6****,** a schematic block diagram of selection of a combination of responses is depicted.

The first set of metrics M1 is provided to the evaluation module EM. The evaluation module EM is responsible for determining return of combined responses investment metric RCRi such as a first return of combined responses investment metric RCR1, the evaluation module EM taking as input the first set of metrics M1. The first return of combined responses investment metric RCR1 is a metric that depicts the ratio between the benefits provided by the deployment of the first combination of responses C1 and the costs of such deployment. By the term costs it is meant that it is possible to quantity the impacts of the deployment of the first combination of responses C1 thanks to the first of metrics C1.

In an embodiment, a first type of costs is direct costs of the deployment of the combination of responses Ci on the resources from the duplicated virtual network DVNi. The evaluation module EM determines the return of combined responses investment metric according to the direct costs of execution of the combination of responses Ci. In an example, the first set of metrics M1 comprises metrics that are useful to cost for example the practical implementation of the combination of responses Ci. In an example the energy consumption can be quantified, so an energy cost can be evaluated and incorporated one of the direct costs. In another example, the first set of metrics M1 comprises a network bandwidth usage, therefore a bandwidth cost can be calculated as a direct cost of the network usage that is consumed for deploying the first combination of responses C1.

In an embodiment, a second type of costs is indirect costs of the deployment of the combination of responses Ci. The evaluation module EM determines the return of combined responses investment metric according to the indirect costs of execution of the combination of responses Ci. In an example, the deployment of the first combination of responses C1 degrades the first QoS metric which impact could be then seen as a fraction of customers from the virtual network VN deciding to claim compensation because of a bad user experience. This degradation is considered as an indirect cost of the deployment of the deployment of the first combination of responses C1.

It should be noted that a bad user experience could be seen as a negative impact, but it could also be the counter part of a protection of user data in an example which can be considered as a benefit derived from the first execution E1 of the first combination of responses C1. The evaluation module EM helps to translate the first QoS metric into benefits and costs that are represented by the first return of combined responses investment metric RCR1.

The costs evaluation for computing return of investment metric in case of attacks were usually depicts by documents such as "A Service Dependency Model for Cost-Sensitive Intrusion Response. Nizar Kheir, Nora Cuppens-Boulahia, Frédéric Cuppens, Hervé Debar. In Computer Security - ESORICS 2010". Differing to such methodology, the evaluation module EM advantageously evaluates return of combined responses investment metrics RCRi based on the simulation of the deployment of combinations of reponses Ci and metrics that are evaluated in real-time instead of statistics or estimations. Therefore the evaluation module EM is able to provide a fine return of combine responses investment metrics RCRi. In an embodiment, the return of combined response investment metric RCRi is a function of a risk mitigation values weighted by estimated impacts of an attack graph, estimated indirect costs, estimated direct costs, and the information provided by the set of metrics Mi.

Similarly, the evaluation module EM evaluates a second return of combined responses investment metric RCR2 from the second set of metric M2, obtained during the second execution E2. The evaluation module also evaluates a third return of combined responses investment metric RCR3 from the third set of metric M3.

The evaluated return of combined responses investment metrics RCRi are processed by the selection module SM. The selection module SM uses as inputs the outcome of the evaluation module EM that processes the set of metrics monitored for the execution of the combination of responses Ci. The selection module SM selects the return of combined responses investment metric that provides an advantageous ratio between benefits and costs. For example, the return of combined responses investment metrics RCRi are numerical values, a low value indicating a poor return of investment, that are ranked by the selection module SM which selects then the highest return of combined responses investment metrics RCRi. In the non-limiting example of figure FIG. 2, the second return of combined responses investment metric RCR2 is the best return of investment metric, so it is selected by the selection module SM. Depending on the determining of the return of combined responses of investment RCRi, the selection modules SM selects then an adapted combination of responses AC. In an example, selecting said second return of combined responses investment metric RCR2 means that the selection module SM considers that the second combination of responses C2, is adapted to address the threat induces by the first attack graph AG1. It means that the second combination of responses is mitigating the first risk R1 with a good compromise of costs versus benefits.

In a non-limiting example, the evaluation module EM and the selection module SM are cooperating in real-time while the combination of responses Ci are being performed in the duplicated virtual network DVNi. The selected adapted combination of responses Ci can be then performed regularly. As the executions of the combination of responses Ci in the duplicated virtual network DVNi progress, it is possible that the selected adapted combination of responses Ci changes after an evaluation of the return of combined responses investment metrics RCRi. It allows the system to dynamically adapt to the scenarios derived from the second set S2 of combination of responses Ci.

In another example, the return of combined responses investment metrics RCRi are evaluated in real-time but the selection of the adapted combination of response AC is performed when the executions are completed.

In an embodiment, the evaluation module EM and the selection module SM are comprised in the hypervisor HY. In another embodiment the evaluation module EM and the selection module SM are respectively standalone devices.

In an embodiment, once the combination of response Ci has been executed in the appropriate duplicated virtual network DVNi, a potential residual attack is estimated. For example, it is possible after the first execution E1, the first combination of response C1 does not mitigate totally the first risk R1, and one of the potential attacks from the plurality remains either partially or fully. Therefore a residual risk persists. Linked to this residual risk, the potential residual attack can be estimated. From said potential residual attack, and in the same manner as for the attack AK, a fourth set of residual attacks graphs is determined. Each residual attacks graph from the fourth set has the estimated potential residual attack as a starting point or seed. Different scenarios of remaining residual attacks are then derived from this starting point and are modeled into the residual attacks graphs. Associated with the residual attacks graphs, residual risks can be determined similarly to the risks RKi. Such residual risks are used for selecting at least one residual attacks graph from the fourth set. In an example the at least one residual attacks graph is selected as it is considered as having the highest risk. The evaluation module EM is then provided with the at least one residual attacks graph for determining the return of combined responses investment RCRi. Advantageously the selected at least one residual attacks graph allows taking into account the remaining possible attacks after execution of the combination of responses Ci into one of the duplicated virtual network DVNi. Taking the at least one residual attacks graph into account for the determination of the return of combined responses investment metric RCRi is advantageous when considered as a criteria for evaluating or measuring the efficiency of the combination of responses Ci.

It should be noted that for each execution of combination of responses Ci in one of the duplicated virtual network DVNi, a residual potential attack is estimated, a fourth set of residual attacks graph is determined, at least one residual attacks graph is selected and used for the determination of the corresponding return of combined responses investment metric RCRi.

In an embodiment, the selected adapted combination of responses AC is applied in the virtual network VN. This execution allows addressing the attack AK and the subsequent predicted attacks with the aim to protect the virtual network VN. Two outcomes are then possible. A first outcome is a successful one as the adapted combination of responses AC mitigates and removes totally or mostly the threats on the virtual network VN. A second outcome is the failure of the adapted combination of responses AC to protect the virtual network VN. In an example it can be due to an unplanned attack taking place on the virtual network VN while the duplicated virtual networks DVNi were simulating the combination of responses Ci. It can be due also to combination of responses Ci that were not able to address all the potential attacks derived from the attacks graphs AGi. The state of the virtual network VN while the failure is experienced can serve to improve the various steps of the selection of the adapted combination of responses Ci. Advantageously, if the virtual network VN is still under an attack, either it be a new one or a remaining one, the selection process can be instantiated another time, allowing for determining the most appropriate combination of responses Ci.

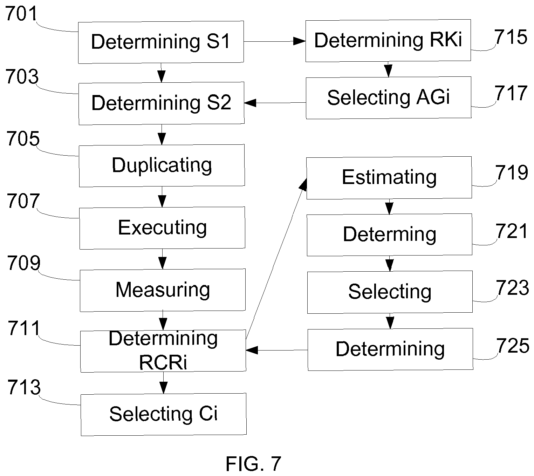

Referring to figure **FIG. 7** a flowchart showing steps performed in an embodiment of the method according to the invention is depicted.

In an embodiment, the method for selecting a combination of responses Ci is performed by the hypervisor HY. The method comprises the following steps.

**Step 701:** From the ongoing attack AK, the attacks graphs AGi are modeled, each attacks graph AGi comprising a plurality P of potential attacks Ai. The modeled attacks graphs AGi are forming the first set S1.

**Step 703:** The second set S2 of combination of responses Ci is determined. The combinations of responses Ci from said second set S2 are addressing at least one attacks graph AGi from the first set S1. The second set S2 purposes is to protect the virtual network VN from the potential attacks Ai, either taken separately or in combination together as depicted by the attacks graph AGi.

**Step 705:** The virtual network VN is duplicated into duplicated virtual networks DVNi that are forming the third set S3.

**Step 707:** At least two combinations of responses Ci from the second set S2 are executed respectively in at least two duplicated virtual networks DVNi from the third set S3. In an example, one of the duplicated virtual networks DVNi from the third set S3 executes one of the combinations of responses Ci from the second set S2, and another duplicated virtual network DVNi from the third set S3 executes another combination of responses Ci from the second set S2. In an example, an element of the second set S2 is executed individually by one of the duplicated virtual network DVNi from the third set S3. In an example, two different duplicated virtual networks DVNi from the third set S3 execute two different combinations of responses from the second set S2.

**Step 709:** During the executions of the combinations of responses Ci, sets of metrics Mi are measured. For each execution, one of the set of metrics Mi is being measured. The sets of metrics Mi, such as the first set of metric M1, are representative of the state of the duplicated virtual networks DVNi while the combinations of responses Ci are being executed.

**Step 711:** From each set of metrics Mi, return of combined responses investment metric RCRi is determined. In an example, said determination is performed at the end of the executions of the combinations of responses Ci in the duplicated virtual networks DVNi. In another example, said determination is performed while the executions of the combinations of responses Ci are ongoing. In yet another example, the evaluation module is in charge of processing the sets of metrics Mi for determining the return of combined responses investment metrics RCRi.

**Step 713:** One the return of combined of combined responses investment metrics RCRi are determined, the adapted combination of responses AC is selected amongst the second set S2 of combination of responses Ci. In an example the selection module SM performs the selection of the adapted combination of responses AC. In said example, the selection module SM selects the adapted combination of responses AC based on the highest return of combined response investment metric RCRi.

In an embodiment, subsequently to the step 701 of determining the first set S1, in the **step 715,** the risks RKi respectively associated to each attacks graph AGi from the first set S1 are determined. The determined risks RKi allows selecting, in the **step 717,** from the first set S1 the at least one attacks graph AGi. In an example, the selection of the at least one attacks graph AGi is based on a criteria from the RKi which is the number of potential attacks Ai that are comprised in the at least one attacks graph AGi. In another example the risks RKi are numerical values allowing ranking the attacks graph AGi from the less dangerous to the most dangerous attacks graph AGi. The at least one attacks graph AGi that is selected is then the most dangerous attacks graph AGi. The selected at least one attacks graph AGi is used then as an input for the step 703, for determining the second set S2.

In an embodiment, the step 711 of determining the return of combined responses investment metrics RCRi further comprises the following steps.

**Step 719:** Once the execution of at least one combination of responses Ci in the corresponding duplicated virtual network DVNi is achieved, the potential residual attack remaining after said execution is estimated.

**Step 721:** Residual attacks graphs are modeled from the potential residual attack and forms the fourth set of residual attacks graphs.

**Step 723:** Residual risks associated to the residual attacks graphs from the fourth set are determined.

**Step 725:** The determined residual risks allow selecting at least one residual attacks graph. In an example the at least one residual attacks graph is selected according its determined residual risk which is considered as the most immediate threat on the duplicated virtual network DVNi, and therefore on the virtual network VN.

The step 711 of determining the return of combined responses investment metric RCRi is then performed and takes as an additional input the selected at least one residual attacks graph. In an example, the selected at least one residual attacks graph is quantified according to a scenario likelihood. Similarly a scenario likelihood is derived from the at least one attacks graph AGi selected from the first set S1 of attacks graph AGi. These two scenario likelihood are then used in the determination of risk mitigation values that are used in the determination of the return of combined responses investment metric RCRi.

The virtual network VN is a mesh of multiple resources either being hardware or software ones, with virtualized functions and services. The flexibility and adaptability factors of the virtual network VN have some drawbacks. They leave a broad variety of spots to be attacked by malicious intruders.

The method for selecting the adapted combination of responses AC to the on-going attack AK offers a solution to preserve the virtual network VN from these malicious intruders.

From the attack AK, attacks graph AGi are modeled as possible scenarios of attacks. Such attacks graph AGi advantageously covers the broad variety of possible vectors of attack. At least one of these attacks graph AGi is selected, representing how the attack AK could evolve into subsequent simultaneous potential attacks Ai. Advantageously the at least one attacks graph AGi is selected according to a risk criteria.

Once a scheme of future attacks is known, the method suggests steps to determine how the virtual network VN should behave. Combination of responses for mitigating the at least one attacks graph are determined, and then are advantageously executed or deployed in copies of the virtual network VN. It allows monitoring how the copies, the duplicated virtual network DVNi, are reacting to a possible combination of responses Ci. The monitoring is performed through the measurements of metrics from the set of metrics Mi. Advantageously the execution and the monitoring is performed in real-time such as the deltas between the virtual network VN and the duplicated virtual network DVNi reside only in the execution of the combination of responses. It allows also to the mechanism for protecting the virtual network VN, such as the hypervisor HY, to keep the pace with ongoing attack AK.

The intermediate or final states of the duplicated virtual networks DVNi help then to quantity the efficiency of the combination of responses. Such quantification is performed through the determination of the return of combined responses investment metric RCRi for each execution of the combination of responses Ci. Advantageously such metrics allow evaluating the efficiency of each combination of responses Ci according to multiple criteria, such as the direct costs or the indirect costs. The return of combined responses investment metrics RCRi, determined for each execution, permit to select the adapted combination of responses Ci. Said adapted combination of responses Ci is considered to be mitigating the threats on the virtual network VN in an optimal way. Advantageously the selection of the adapted combination of responses Ci is performed without endangering the virtual network VN, as only copies are executing the combination of responses. The method enables the hypervisor HY to select one of the combinations of responses Ci that has already been assessed in terms of potential behavior. It avoids applying a combination of response that is too systematic and probably not the most adapted one to deals with the outcome of the ongoing attack AK.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A method of selecting a combination of responses (Ci) to an on-going attack (AK) on a virtual network (VN), said method comprising the following steps performed by a hypervisor (HY):
- determining (701) a first set (S1) of attacks graphs (AGi), each attacks graph (AGi) being modeled from said on-going attack (AK) and comprising a plurality (P) of potential attacks (Ai) and,
- determining (703) a second set (S2) of combinations of responses (Ci) to the plurality (P) of potential attacks (Ai) from at least one attacks graph (AGi) of the first set (S1),
- duplicating (705) the virtual network (VN) into a third set (S3) of duplicated virtual networks (DVNi),
- executing (707) at least a first and a second combination of responses (Ci) of the second set (S2) in at least a first and a second duplicated virtual network (DVNi) of the third set (S3), respectively, and measuring (709) a set of metrics (Mi) representative of the state of each of said first and second duplicated virtual network (DVNi) during execution of said first and second combination of responses,
- determining (711) a return of combined responses investment metric (RCRi) from the measured set of metrics (Mi),
- selecting (713), depending on the determined return of combined responses investment metric (RCRi), an adapted combination of responses (AC) amongst the second set (S2) of combinations of responses (Ci).

2. A method according to claim 1, wherein the step of executing (707) is performed simultaneously and in real-time in each duplicated virtual network (DVNi) of said at least first and second duplicated virtual networks (DVNi) from the third set (S3).

3. A method according to any of the claims 1 to 2 further comprising the following steps:
- determining (715) a risk (RKi) for each attacks graph (AGi) from the first set (S1),
- selecting (717) the at least one attacks graph (AGi) according to its associated risk (RKi).

4. A method according to any of the claims 1 to 3, wherein a response (Ri) comprised in a combination of responses (Ci) from the second set (S2) comprises a set of security policies (SPi).

5. A method according to any of the claims 1 to 4, wherein the set of metrics (Mi) comprises a quality of service metric and/or an energy consumption metric and/or an execution time metric, said execution time corresponding to the time needed to execute each of the combination responses (Ci) in the duplicated virtual networks (DVNi).

6. A method according to any of the claims 1 to 5, wherein the step of determining (711) the return of combined responses investment metric (RCRi) is achieved by determining the return of combined responses investment metric (RCRi) according to direct costs of execution of the combination of responses (Ci) in the duplicated virtual networks (DVNi).

7. A method according to any of the claims 1 to 6, wherein the step of determining (711) the return of combined responses investment metric (RCRi) determines the return of combined responses investment metric (RCRi) according to indirect costs of execution of the combination of responses (Ci) in the duplicated virtual networks (DVNi).

8. A method according to any of the claims 1 to 7, wherein the step of determining (711) the return of combined responses investment metric (RCRi) further comprises the following steps:
- estimating (719) a potential residual attack remaining after the execution of one combination of responses (Ci) in the duplicated virtual network (DVNi),
- determining (721) a fourth set of residual attacks graphs, each residual attacks graph being modeled from the potential residual attack,
- determining (723) a residual risk for each residual attacks graph,
- selecting (725) at least one residual attacks graph from the fourth set according to its determined residual risk,
- determining (711) the return of combined responses investment metric (RCRi) according to the residual risk from the selected at least one residual attacks graph.

9. A hypervisor (HY) for selecting a combination of responses (Ci) to an on-going attack (AK) on a virtual network (VN), comprising:
- means for determining a first set (S1) of attacks graph (AGi), each attacks graph (AGi) being modeled from said on-going attack (AK) and comprising a plurality (P) of potential attacks (Ai),
- means for determining a second set (S2) of combination of responses (Ci) to the plurality (P) of potential attacks (Ai) from at least one attacks graph (AGi) of the first set (S1),
- a duplication module (DM) for duplicating the virtual network (VN) into a third set (S3) of duplicated virtual networks (DVNi),
- an execution module (XM) for executing at least a first and a second combination of responses (Ci) of the second set (S2) in at least a first and a second duplicated virtual network (DVNi) of the third set (S3),
- a measurement module (MM) for measuring a set of metrics (Mi) representative of the state of each of the first and second duplicated virtual network (DVNi) during execution of said first and second combination of responses,
- an evaluation module (EM) for determining a return of combined responses investment metric (RCRi) from the measured set of metrics (Mi),
- a selection module (SM) for selecting an adapted combination of responses (AC) amongst the second set (S2) of combinations of responses (Ci).

10. A hypervisor (HY) according to claim 9, wherein the hypervisor (HY) is a centralized entity in the virtual network (VN).

11. A hypervisor (HY) according to claim 9, wherein the hypervisor (HY) is a distributed entity in the virtual network (VN).

## Patentansprüche

1. Verfahren zum Auswählen einer Kombination von Reaktionen (Ci) auf einen laufenden Angriff (AK) auf ein virtuelles Netzwerk (VN), wobei das Verfahren folgende, von einem Hypervisor (HY) durchgeführte Schritte umfasst:
- Ermitteln (701) eines ersten Satzes (S1) Angriffsgraphen (AGi), wobei jeder Angriffsgraph (AGi) aus dem laufenden Angriff (AK) modelliert wird und eine Mehrzahl (P) von potentiellen Angriffen (Ai) umfasst, und
- Ermitteln (703) eines zweiten Satzes (S2) Kombinationen von Reaktionen (Ci) auf die Mehrzahl (P) von potentiellen Angriffen (Ai) aus wenigstens einem Angriffsgraphen (AGi) des ersten Satzes (S1),
- Duplizieren (705) des virtuellen Netzwerks (VN) in einen dritten Satz (S3) duplizierter virtueller Netzwerke (DVNi),
- Ausführen (707) wenigstens einer ersten und einer zweiten Kombination von Reaktionen (Ci) des zweiten Satzes (S2) in jeweils wenigstens einem ersten und einem zweiten duplizierten virtuellen Netzwerk (DVNi) des dritten Satzes (S3), und Messen (709) eines Satzes Maßzahlen (Mi), die jeweils den Zustand des ersten und des zweiten duplizierten virtuellen Netzwerks (DVNi) während der Ausführung der ersten und zweiten Kombination von Reaktionen darstellen,
- Ermitteln (711) einer Kombinierte-Reaktionen-Rendite-Maßzahl (RCRi) aus dem gemessenen Satz Maßzahlen (Mi),
- Auswählen (713), in Abhängigkeit von der ermittelten Kombinierte-Reaktionen-Rendite-Maßzahl (RCRi), einer angepassten Kombination von Reaktionen (AC) unter dem zweiten Satz (S2) von Kombinationen von Reaktionen (Ci).

2. Verfahren gemäß Anspruch 1, wobei der Schritt des Ausführens (707) gleichzeitig und in Echtzeit in jedem duplizierten virtuellen Netzwerk (DVNi) des wenigstens ersten und zweiten duplizierten virtuellen Netzwerks (DVNi) aus dem dritten Satz (S3) durchgeführt wird.

3. Verfahren gemäß einem der Ansprüche 1 bis 2, das ferner folgende Schritte umfasst:
- Ermitteln (715) eines Risikos (RKi) für jeden Angriffsgraphen (AGi) aus dem ersten Satz (S1),
- Auswählen (717) des wenigstens einen Angriffsgraphen (AGi) gemäß seinem ihm zugeordneten Risiko (RKi).

4. Verfahren gemäß einem der Ansprüche 1 bis 3, wobei eine in einer Kombination von Reaktionen (Ci) aus dem zweiten Satz (S2) umfasste Reaktion (Ri) einen Satz Sicherheitsstrategien (SPi) umfasst.

5. Verfahren gemäß einem der Ansprüche 1 bis 4, wobei der Satz Maßzahlen (Mi) eine Dienstgütemaßzahl und/oder eine Energieverbrauchsmaßzahl und/oder eine Ausführungszeitmaßzahl umfasst, wobei die Ausführungszeit der zum Ausführen jeder der Kombinationsreaktionen (Ci) in den duplizierten virtuellen Netzwerken (DVNi) benötigten Zeit entspricht.

6. Verfahren gemäß einem der Ansprüche 1 bis 5, wobei der Schritt des Ermittelns (711) der Kombinierte-Reaktionen-Rendite-Maßzahl (RCRi) durch Ermitteln der Kombinierte-Reaktionen-Rendite-Maßzahl (RCRi) gemäß direkten Ausführungskosten der Kombination von Reaktionen (Ci) in den duplizierten virtuellen Netzwerken (DVNi) erzielt wird.

7. Verfahren gemäß einem der Ansprüche 1 bis 6, wobei der Schritt des Ermittelns (711) der Kombinierte-Reaktionen-Rendite-Maßzahl (RCRi) die Kombinierte-Reaktionen-Rendite-Maßzahl (RCRi) gemäß indirekten Ausführungskosten der Kombination von Reaktionen (Ci) in den duplizierten virtuellen Netzwerken (DVNi) ermittelt.

8. Verfahren gemäß einem der Ansprüche 1 bis 7, wobei der Schritt des Ermittelns (711) der Kombinierte-Reaktionen-Rendite-Maßzahl (RCRi) ferner folgende Schritte umfasst:
- Abschätzen (719) eines nach der Ausführung einer Kombination von Reaktionen (Ci) im duplizierten virtuellen Netzwerk (DVNi) verbleibenden potentiellen Restangriffs,
- Ermitteln (721) eines vierten Satzes Restangriffsgraphen, wobei jeder Restangriffsgraph aus dem potentiellen Restangriff modelliert wird,
- Ermitteln (723) eines Restrisikos für jeden Restangriffsgraphen,
- Auswählen (725) wenigstens eines Restangriffsgraphen aus dem vierten Satz gemäß seinem ermittelten Restrisiko,
- Ermitteln (711) der Kombinierte-Reaktionen-Rendite-Maßzahl (RCRi) gemäß dem Restrisiko aus dem ausgewählten wenigstens einen Restangriffsgraphen.

9. Hypervisor (HY) zum Auswählen einer Kombination von Reaktionen (Ci) auf einen laufenden Angriff (AK) auf ein virtuelles Netzwerk (VN), der umfasst:
- Mittel zum Ermitteln eines ersten Satzes (S1) Angriffsgraphen (AGi), wobei jeder Angriffsgraph (AGi) aus dem laufenden Angriff (AK) modelliert wird und eine Mehrzahl (P) von potentiellen Angriffen (Ai) umfasst,
- Mittel zum Ermitteln eines zweiten Satzes (S2) Kombinationen von Reaktionen (Ci) auf die Mehrzahl (P) von potentiellen Angriffen (Ai) aus wenigstens einem Angriffsgraphen (AGi) des ersten Satzes (S1),
- ein Duplizierungsmodul (DM) zum Duplizieren des virtuellen Netzwerks (VN) in einen dritten Satz (S3) duplizierter virtueller Netzwerke (DVNi),
- ein Ausführungsmodul (XM) zum Ausführen wenigstens einer ersten und einer zweiten Kombination von Reaktionen (Ci) des zweiten Satzes (S2) in wenigstens einem ersten und einem zweiten duplizierten virtuellen Netzwerk (DVNi) des dritten Satzes (S3),
- ein Messmodul (MM) zum Messen eines Satzes Maßzahlen (Mi), die jeweils den Zustand des ersten und des zweiten duplizierten virtuellen Netzwerks (DVNi) während der Ausführung der ersten und zweiten Kombination von Reaktionen darstellen,
- ein Auswertungsmodul (EM) zum Ermitteln einer Kombinierte-Reaktionen-Rendite-Maßzahl (RCRi) aus dem gemessenen Satz Maßzahlen (Mi),
- ein Auswahlmodul (SM) zum Auswählen einer angepassten Kombination von Reaktionen (AC) unter dem zweiten Satz (S2) von Kombinationen von Reaktionen (Ci).

10. Hypervisor (HY) gemäß Anspruch 9, wobei der Hypervisor (HY) eine zentralisierte Entität im virtuellen Netzwerk (VN) ist.

11. Hypervisor (HY) gemäß Anspruch 9, wobei der Hypervisor (HY) eine dezentralisierte Entität im virtuellen Netzwerk (VN) ist.

## Revendications

1. Procédé de sélection d'une combinaison de réponses (Ci) à une attaque en cours (AK) sur un réseau virtuel (VN), ledit procédé comprenant les étapes suivantes effectuées par un hyperviseur (HY) :
- la détermination (701) d'un premier ensemble (S1) de graphes d'attaques (AGi), chaque graphe d'attaque (AGi) étant modélisé à partir de ladite attaque en cours (AK) et comprenant une pluralité (P) d'attaques potentielles (Ai) et,
- la détermination (703) d'un second ensemble (S2) de combinaisons de réponses (Ci) à la pluralité (P) d'attaques potentielles (Ai) à partir d'au moins un graphe d'attaques (AGi) du premier ensemble (S1),
- la duplication (705) du réseau virtuel (VN) en un troisième ensemble (S3) de réseaux virtuels dupliqués (DVNi),
- l'exécution (707) d'au moins une première et une seconde combinaisons de réponses (Ci) du second ensemble (S2) dans au moins un premier et un second réseau virtuel dupliqués (DVNi) du troisième ensemble (S3), respectivement, et la mesure (709) d'un ensemble de métriques (Mi) représentatif de l'état de chacun des premier et second réseaux virtuels dupliqués (DVNi) pendant l'exécution desdites première et seconde combinaisons de réponses,
- la détermination (711) d'un retour de la métrique d'investissement à réponses combinées (RCRi) à partir de l'ensemble de métriques mesurées (Mi),
- la sélection (713), en fonction du retour déterminé de la métrique d'investissement à réponses combinées (RCRi), d'une combinaison adaptée de réponses (AC) parmi le second ensemble (S2) de combinaisons de réponses (Ci).

2. Procédé selon la revendication 1, dans lequel l'étape d'exécution (707) est effectuée simultanément et en temps réel dans chaque réseau virtuel dupliqué (DVNi) dudit ou desdits premier et second réseaux virtuels dupliqués (DVNi) à partir du troisième ensemble (S3).

3. Procédé selon l'une quelconque des revendications 1 et 2, comprenant en outre les étapes suivantes :
- détermination (715) d'un risque (RKi) pour chaque graphe d'attaque (AGi) à partir du premier ensemble (S1),
- sélection (717) du graphe ou des graphes d'attaque (AGi) en fonction du risque associé (RKi).

4. Procédé selon l'une quelconque des revendications 1 à 3, dans lequel une réponse (Ri) comprise dans une combinaison de réponses (Ci) du second ensemble (S2) comprend un ensemble de politiques de sécurité (SPi).

5. Procédé selon l'une quelconque des revendications 1 à 4, dans lequel l'ensemble de métriques (Mi) comprend une métrique de qualité de service et/ou une métrique de consommation d'énergie et/ou une métrique de temps d'exécution, ledit temps d'exécution correspondant au temps nécessaire pour exécuter chacune des réponses combinées (Ci) dans les réseaux virtuels dupliqués (DVNi).

6. Procédé selon l'une quelconque des revendications 1 à 5, dans lequel l'étape de détermination (711) du retour de la métrique d'investissement de réponses combinées (RCRi) est obtenue en déterminant le retour de la métrique d'investissement de réponses combinées (RCRi) en fonction des coûts directs d'exécution de la combinaison de réponses (Ci) dans les réseaux virtuels dupliqués (DVNi).

7. Procédé selon l'une quelconque des revendications 1 à 6, dans lequel l'étape de détermination (711) du retour de la métrique d'investissement de réponses combinées (RCRi) détermine le retour de la métrique d'investissement de réponses combinées (RCRi) en fonction des coûts indirects d'exécution de la combinaison de réponses (Ci) dans les réseaux virtuels dupliqués (DVNi).

8. Procédé selon l'une quelconque des revendications 1 à 7, dans lequel l'étape de détermination (711) du retour de la métrique d'investissement de réponses combinées (RCRi) comprend en outre les étapes suivantes :
- estimation (719) d'une attaque potentielle résiduelle, encore présente après l'exécution d'une combinaison de réponses (Ci) dans le réseau virtuel dupliqué (DVNi),
- détermination (721) d'un quatrième ensemble de graphes d'attaques résiduelles, chaque graphe d'attaque résiduelle étant modélisé à partir de l'attaque résiduelle potentielle,
- détermination (723) d'un risque résiduel pour chaque graphe d'attaque résiduelle,
- sélection (725) d'au moins un graphe d'attaque résiduelle du quatrième ensemble en fonction de son risque résiduel déterminé,
- détermination (711) du retour de la métrique d'investissement de réponses combinées (RCRi) en fonction du risque résiduel issu du ou des graphes d'attaque résiduelles sélectionnés.

9. Hyperviseur (HY) pour sélectionner une combinaison de réponses (Ci) à une attaque (AK) en cours sur un réseau virtuel (VN), comprenant :
- des moyens de détermination d'un premier ensemble (S1) de graphes d'attaque (AGi), chaque graphe d'attaque (AGi) étant modélisé à partir de ladite attaque en cours (AK) et comprenant une pluralité (P) d'attaques potentielles (Ai),
- des moyens pour déterminer un second ensemble (S2) de combinaison de réponses (Ci) à la pluralité (P) d'attaques potentielles (Ai) à partir d'au moins un graphe d'attaque (AGi) du premier ensemble (S1),
- un module de duplication (DM) pour dupliquer le réseau virtuel (VN) dans un troisième ensemble (S3) de réseaux virtuels dupliqués (DVNi),
- un module d'exécution (XM) pour exécuter au moins une première et une seconde combinaisons de réponses (Ci) du second ensemble (S2) dans au moins un premier et un second réseau virtuel dupliqués (DVNi) du troisième ensemble (S3),
- un module de mesure (MM) pour mesurer un ensemble de métriques (Mi) représentatif de l'état de chacun des premier et second réseaux virtuels dupliqués (DVNi) pendant l'exécution desdites première et seconde combinaisons de réponses,
- un module d'évaluation (EM) pour déterminer un retour de la métrique d'investissement à réponses combinées (RCRi) à partir de l'ensemble de métriques mesurées (Mi),
- un module de sélection (SM) pour sélectionner une combinaison adaptée de réponses (AC) parmi le second ensemble (S2) de combinaisons de réponses (Ci).

10. Hyperviseur (HY) selon la revendication 9, dans lequel l'hyperviseur (HY) est une entité centralisée dans le réseau virtuel (VN).

11. Hyperviseur (HY) selon la revendication 9, dans lequel l'hyperviseur (HY) est une entité distribuée dans le réseau virtuel (VN).
